# EUROPÄISCHE PATENTSCHRIFT

(11) **EP 2 760 586 B1**
(45) Veröffentlichungstag und Bekanntmachung des Hinweises auf die Patenterteilung: **04.05.2016**
(21) Anmeldenummer: 12770036.7
(22) Anmeldetag: 21.09.2012
(51) Int. Cl.: B02C 4/28, B30B 15/30, B02C 4/02

(54) **WALZENMÜHLE UND VERFAHREN ZUR ZERKLEINERUNG VON SPRÖDEM MAHLGUT**
ROLLER MILL AND METHOD FOR MILLING BRITTLE MILLING MATERIAL
BROYEUR A CYLINDRES ET PROCEDE DE BROYAGE D'UNE MATIERE A BROYER CASSANTE

(30) Priorität: 30.09.2011 DE 102011054086
(43) Veröffentlichungstag der Anmeldung: 06.08.2014
(73) Patentinhaber: ThyssenKrupp Industrial Solutions AG, 45143 Essen (DE)
(72) Erfinder: HEINICKE, Felix, 01662 Meissen (DE); KNECHT, Johann, 59329 Wadersloh (DE); PARTSCH, Wolfgang, 59269 Beckum (DE); ASNEIMER, Johann, 59065 Hamm (DE)
(74) Vertreter: Tetzner, Michael
(86) Internationale Anmeldenummer: PCT/EP2012/068608
(87) Internationale Veröffentlichungsnummer: WO 2013/045354

(56) Entgegenhaltungen:
- WO-A1-2009/007337
- AU-B2- 640 518
- DE-A1- 3 742 552
- DE-U1-202010 009 151
- US-A- 1 560 800

## Beschreibung

Die Erfindung betrifft eine Walzenmühle sowie ein Verfahren zur Zerkleinerung von sprödem Mahlgut unterschiedlicher Körnung.

Walzenmühlen, wie beispielsweise eine Gutbettwalzenmühle, enthalten zwei horizontal nebeneinander angeordnete, angetriebene Mahlwalzen, die mit hohem Druck unter Ausbildung eines Mahlspaltes gegeneinander gepresst werden. Das zu zerkleinernde Mahlgut wird beim Passieren des Mahlspalts weitgehend zerkleinert, wobei Agglomerate (Schülpen) gebildet werden, die bereits einen hohen Anteil Fertigprodukt enthalten. Gutbettwalzenmühlen dieser Art sind insbesondere durch die DE 27 08 053 C3 bekannt geworden und ermöglichen eine erhebliche Energieeinsparung bei der Zerkleinerung von sprödem Mahlgut, wie beispielsweise Zementklinker und dergleichen.

Das Mahlgut wird üblicherweise über einen Aufgabeschacht zugeführt. Zur Vermeidung von unnötigem Verschleiß der Mahlwalzen wird der Aufgabeschacht meist mit einem vorgegebenen Füllstand betrieben. Das Mahlgut wird über eine Zuführeinrichtung, beispielsweise einen Bandförderer, in den Aufgabeschacht der kontinuierlich betriebenen Walzenmühle abgeworfenen, wobei sich durch den Füllstand im Aufgabeschacht ein Schüttkegel ausbildet. Nachdem das Mahlgut üblicherweise in unterschiedlicher Körnung vorliegt, kommt es durch diesen Schüttkegel zu so genannten Entmischungserscheinungen, sodass, bezogen auf die axiale Länge des Mahlspalts, das Material an den äußeren Enden des Mahlspalts gröber als in der Mitte ist. Diese spezielle Korngrößenverteilung wird jedoch als ineffizient angesehen.

Zur Verteilung des Mahlguts im Aufgabeschacht wurden daher die unterschiedlichsten Verteilereinrichtungen vorgeschlagen. In der DE 37 42 552 A1 wird der Aufgabeschacht in mehrere Aufgabeschachtzellen unterteilt, deren dem Mahlspalt zugewandte Mündungsöffnungen eine unterschiedliche Lage relativ zur vertikalen Mittelebene der Gutbettwalzenmühle aufweisen. Gemäß der DE 35 15 673 A1 wurden im Mahlspalt quer zur Mahlspaltlängsrichtung eine Vielzahl von Seitenwänden angeordnet, die sich bis zum Mahlspalt erstrecken, wobei die Zwischenwände eine im kleiner werdende Höhe aufweisen und das Mahlgut nach dem Überlaufprinzip in die einzelne Teilschächte gelangt.

In der DE 39 06 295 A1 wurde vorgeschlagen, das Mahlgut zunächst in wenigstens zwei unterschiedliche Kornfraktionen aufzuteilen und diese dann über unterschiedliche Bereiche des Aufgabeschachtes zuzuführen, dabei wurde die gröbere Kornfraktion vorwiegend dem inneren Bereich und die feinere Kornfraktion vorwiegend dem äußeren Bereich des dem Mahlspalt zuströmenden Walzengutstromes aufgegeben. Die vorhergehende Trennung in die beiden Kornfraktionen ist jedoch relativ aufwändig.

Der DE 20 2010 009 151 U1 liegt die Problematik zugrunde, dass die Schachtwände des Aufgabeschachtes einen gleichmäßigen Mahlgutfluss verhindern. Es wurde daher vorgeschlagen, eine über den Mahlspalt in axialer Richtung verlaufende Öffnung vorzusehen, die eine zur axialen Mitte des Mahlspaltes verjüngte Form aufweist. Auf diese Weise wird der Materialfluss, welcher durch die Wandungen behindert wird, durch die größere Öffnung in diesem Bereich begünstigt und damit ausgeglichen.

Aus der US 1 560 800 A ist einer Zuführ- und Verteilereinrichtung für Mahlgut einer Rollenmühle bekannt, die mittig oberhalb des Mahlspalts angeordnet ist und Mahlgut über ein rotierendes Verteilerelement über die gesamte Breite des Mahlspalts verteilt.

Der Erfindung liegt nun die Aufgabe zugrunde, die Effizienz der Walzenmühle zur Zerkleinerung von sprödem Mahlgut weiter zu steigern und dadurch die für die Zerkleinerung erforderliche Energie zu reduzieren.

Erfindungsgemäß wird diese Aufgabe durch die Merkmale der Ansprüche 1 und 5 gelöst.

Bei der Lösung der Aufgabe lagen insbesondere die folgenden Erkenntnisse zugrunde:
Die durch den Schüttkegel in einem mit Füllstand betriebenen Aufgabeschacht entstehenden Entmischungserscheinungen führen dazu, dass die Randbereiche des Mahlspaltes mit gröberen Material als der Mittenbereich des Mahlspaltes beaufschlagt wird. Des Weiteren wurde erkannt, dass über die Länge des Mahlspaltes gesehen, der Mittenbereich eine energetisch effizientere Zerkleinerung als die Randbereiche ermöglicht. Man hat daher herausgefunden, dass es für eine effizientere Zerkleinerung zweckmäßig wäre, wenn man die Korngrößenverteilung über die Länge des Mahlspaltes umkehren könnte, sodass an den äußeren Rändern eher das feinere Mahlgut und im Mittenbereich eher das gröbere Mahlgut vorgesehen ist.

Die erfindungsgemäße Walzemühle zur Zerkleinerung von sprödem Mahlgut unterschiedlicher Körnung weist zwei Mahlwalzen auf, die zwischen sich einen Mahlspalt bilden und sieht einen Aufgabeschacht zur Zuführung des Mahlguts zum Mahlspalt vor, wobei im Aufgabeschacht wenigstens eine Verteilereinrichtung vorgesehen ist, wobei die Verteilereinrichtung über einem Mittenbereich des Mahlspalts angeordnet ist und aus mehreren Balken besteht oder als Nadelschieber ausgebildet ist, wobei sich die Balken oder der Nadelschieber quer zur Längserstreckung des Mahlspaltes über den Mahlspalt erstrecken und 5 bis 70%, vorzugsweise 10 bis 55%, des Querschnitts des Aufgabeschachts abdecken.

Gemäß dem erfindungsgemäßen Verfahren zur Zerkleinerung von sprödem Mahlgut unterschiedlicher Körnung wird das Mahlgut einem Aufgabeschacht aufgegeben und in einem sich zwischen zwei Mahlwalzen ausbildenden Mahlspalt zerkleinert, wobei das Mahlgut im Aufgabeschacht mittels einer Verteilereinrichtung umgelenkt wird, sodass sich im Aufgabeschacht wenigstens zwei in Richtung der Längserstreckung des Mahlspalts gegenüberliegende Schüttkegel ausbilden und das gröbere Mahlgut zu einem Mittenbereich des Mahlspalts abrutscht, sodass sich bezogen auf die Längserstreckung des Mahlspaltes im Mittenbereich des Mahlspalts gröberes Mahlgut als in den Randbereichen ansammelt.

Entgegen allen bisherigen Bemühungen, das Mahlgut über die Länge des Mahlspaltes möglichst gleichmäßig zu verteilen, nimmt die vorliegende Erfindung die durch die Zufuhr des Mahlguts in den Aufgabeschacht bedingte Entmischung bewusst in Kauf, wobei das Mahlgut durch die Verteilereinrichtung aber so verteilt wird, dass sich bezogen auf die Längsrichtung des Mahlspaltes in einem Mittenbereich des Mahlspaltes gröberes Mahlgut als in den Randbereichen ansammelt. Auf diese Weise kann der energetisch effizientere Mittenbereich gezielt für die Zerkleinerung des gröberen Mahlgutes genutzt werden.

Bei den der Erfindung zugrundeliegenden Versuchen hat sich gezeigt, dass sich mit der erfindungsgemäßen Gutverteilung gegenüber einer herkömmlichen Gutverteilung, bei der die gröberen Partikel in Randbereichen und die feineren Partikel im Mittenbereich vorliegen, eine Energieeinsparung von bis zu 20% und mehr erreichen lässt.

Weitere Ausgestaltungen der Erfindung sind Gegenstand der Unteransprüche.

Gemäß einer bevorzugten Ausgestaltung der Erfindung ist die Verteilereinrichtung quer über einem Mittenbereich des Mahlspaltes angeordnet. Sie kann sich dabei insbesondere von einer Wandung des Aufgabeschachtes bis zu einer gegenüberliegenden Wandung des Aufgabeschachtes erstrecken. Ferner kann die Verteilereinrichtung in der Breite und/oder im Abstand vom Mahlspalt einstellbar sein.

Es gibt die unterschiedlichsten Möglichkeiten die Verteilereinrichtung zu realisieren. So kann sie beispielsweise aus 1 bis 5 Balken bestehen oder als Nadelschieber ausgebildet sein. Auch ist eine Ausbildung der Verteilereinrichtung als ein in einem Mittenbereich des Aufgabeschachts angeordneter Kegel denkbar.

Weiterhin kann vorgesehen werden, dass die Breite der Verteilereinrichtung und/oder die Höhe der Verteilereinrichtung über dem Mahlspalt im laufenden Betrieb der Walzenmühle in Abhängigkeit wenigstens eines Betriebsparameters eingestellt wird.

Die Erfindung wird anhand der nachfolgenden Beschreibung einiger Ausführungsbeispiele und der Zeichnung näher erläutert.

In der Zeichnung zeigen
- Fig. 1a-1c: verschiedene Ansichten einer Walzenmühle gemäß einem ersten Ausführungsbeispiel zur Verwirklichung des erfindungsgemäßen Verfahrens,
- Fig. 2: ein Diagramm der Auswirkung auf die Feinheitsverteilung über dem Mahlspalt bei unterschiedlicher Abdeckung des Querschnitts des Aufgabeschachts,
- Fig. 3a-3c: verschiedene Ansichten einer Walzenmühle gemäß einem zweiten Ausführungsbeispiel zur Verwirklichung des erfindungsgemäßen Verfahrens,
- Fig. 4a+4b: eine Drauf- und Seitenansicht eines Aufgabeschachtes gemäß einem dritten Ausführungsbeispiel,
- Fig. 5a+5b: eine Drauf- und Seitenansicht eines Aufgabeschachtes gemäß einem vierten Ausführungsbeispiel.

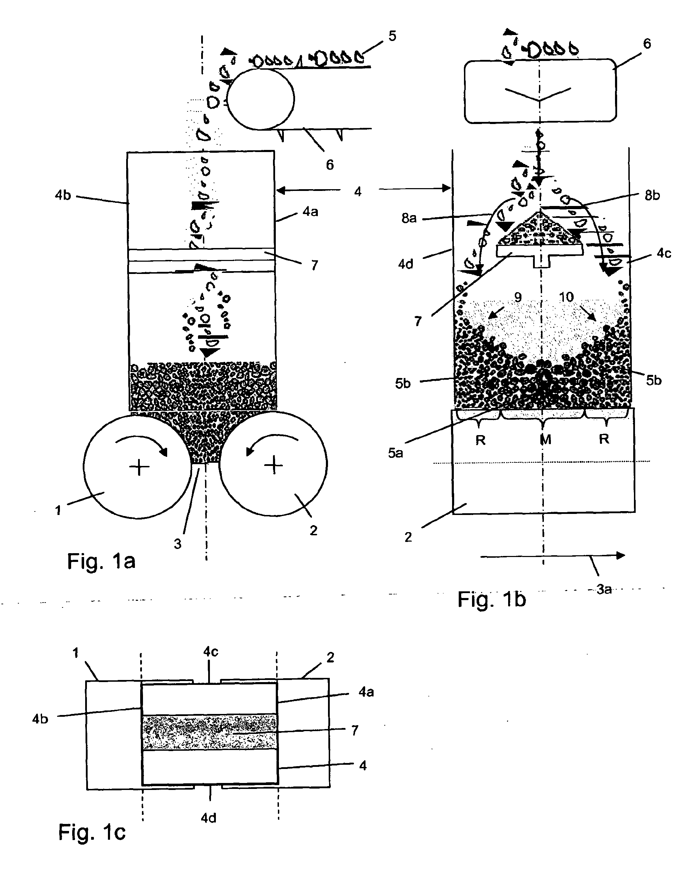

Die in den Fig. 1a-1c dargestellte Walzenmühle weist im Wesentlichen zwei Mahlwalzen 1, 2 auf, die zwischen sich einen Mahlspalt 3 bilden sowie einen Aufgabeschacht 4 zur Zuführung von Mahlgut 5, welches über eine Zuführeinrichtung 6, beispielsweise einen Bandförderer, in den Aufgabeschacht 4 gelangt.

Bei der Walzenmühle handelt es sich beispielsweise um eine sogenannte Gutbettwalzenmühle, bei der die Mahlwalzen 1, 2 unter Ausbildung des Mahlspaltes 3 mit hohem Druck von beispielsweise 50 MPa gegeneinander gepresst werden. Bei dem zu zerkleinernden Mahlgut 5 kann es sich um ein mineralisches Gut mit einer Korngröße von beispielsweise bis zu 100 mm handeln.

Um einen gleichmäßigen Mahlgutzufluss zum Mahlspalt 3 zu gewährleisten, wird das Mahlgut 5 so zugeführt, dass sich immer ein bestimmter Füllstand im Aufgabeschacht 4 einstellt. Dieser hat ebenfalls zur Folge, dass sich der Verschleiß der Mahlwerkzeuge verringert und somit eine höhere Laufleistung der Maschine erzielt wird.

Oberhalb des im Aufgabeschacht 4 befindlichen Mahlguts 5 ist eine Verteilereinrichtung 7 vorgesehen, die sich quer zur Längserstreckung des Mahlspalts 3 über diesen erstreckt und sich im dargestellten Ausführungsbeispiel als T-Träger von einer Wandung 4a bis zur einer gegenüberliegenden Wandung 4b des Aufgabeschachts 4 erstreckt. Die Verteilereinrichtung ist hier in einem Mittenbereich M angeordnet.

Das Mahlgut 5 trifft als Gutstrom 8 auf die Verteilereinrichtung 7 und wird dort in zwei Teilströme 8a, 8b aufgeteilt (siehe Fig. 1b). Auf der Verteilereinrichtung 7 bildet sich dabei eine kleine Materialschicht aus, die gleichzeitig als Verschleißschutz dient. Auf diese Weise bilden sich an den gegenüberliegenden Wandungen 4c und 4d, welche den Aufgabeschacht 4 in Längserstreckung des Mahlspaltes 3 begrenzen, gegenüberliegende Schüttkegel 9, 10 aus. Schüttkegel haben bei Mahlgut mit unterschiedlicher Körnung die Eigenschaft, dass sich am Fuße des Schüttkegels eher das gröbere Mahlgut 5a und weiter oben das feinere Mahlgut 5b ansammelt. Um das gröbere Mahlgut verstärkt in den Mittenbereich M des Mahlspalts zu bekommen, nutzt die Erfindung das Entmischungsverhalten von Schüttkegeln gezielt aus. Entscheidend ist jedoch, dass die Verteilereinrichtung zum einen quer zur Längserstreckung des Mahlspaltes angeordnet ist und einen Teil des Querschnittes des Aufgabeschachtes abdeckt, wobei die der Erfindung zugrundeliegenden Versuche eine Abdeckung von 5 bis 70%, vorzugsweise 10 bis 55% als zweckmäßig ergeben haben. Bei einer größeren Abdeckung kann zwar der Effekt noch erzielt werden, jedoch ist der Materialfluss unter Umständen so stark behindert, dass ein vorgegebener Füllstand nicht mehr zuverlässig aufrechterhalten werden kann.

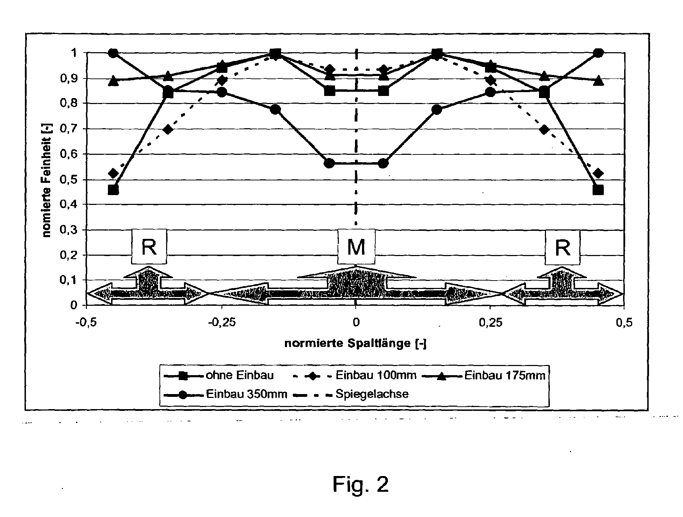

In dem Diagram gemäß Fig. 2 ist die nomierte Spaltlänge gegenüber der nomierten Feinheit aufgetragen. Die Spaltlänge "0" kennzeichnet dabei genau die Mitte in der Längserstreckung 3a des Mahlspaltes 3. Bei der nomierten Feinheit ist das Gut umso feiner, je näher der Wert bei 1 liegt und umso gröber je kleiner der Wert ist. Im Diagramm wurden vier Kornverteilungen dargestellt, die sich durch unterschiedlich breite Verteilereinrichtungen ergeben haben. Man erkennt sehr deutlich, dass sich ohne Verwendung einer Verteilereinrichtung 7 das gröbere Gut vermehrt in den Randbereichen R und das feinere Gut in einem Mittenbereich M des Mahlspaltes 3 ansammelt. Durch eine immer breiter werdende Verteilereinrichtung 7 ist zu erkennen, dass sich die Korngrößenverteilung bei einer Verteilereinrichtung mit einer Breite von 350 mm nahezu umkehrt, indem nun das feinere Mahlgut in den Randbereichen R und das gröbere Mahlgut im Mittenbereich M des Mahlspaltes vorliegt. Die Breite von 350 mm entsprach einer Abdeckung des Querschnitts des Aufgabeschachtes 4 von etwa 43%.

Die erforderliche Abdeckung des Aufgabeschachtes durch die Verteilereinrichtung und auch die Höhe der Verteilereinrichtung 7 über dem Mahlspalt hängt entscheidend vom zu zerkleinernden Mahlgut 5 ab. Es kann daher vorteilhaft sein, wenn man die Breite der Verteilereinrichtung 7 und auch den Abstand zum Mahlspalt einstellen kann und ggf. auch während des Betriebes entsprechende Verstellungen vornehmen kann. Dabei ist es durchaus denkbar, dass man diese Verstellung in Abhängigkeit eines Betriebsparameters, wie beispielsweise der Laufruhe der Anlage, der Energieaufnahme der Antriebsmotoren der Mahlwalzen oder dem Durchsatz, manuell oder automatisch anpasst.

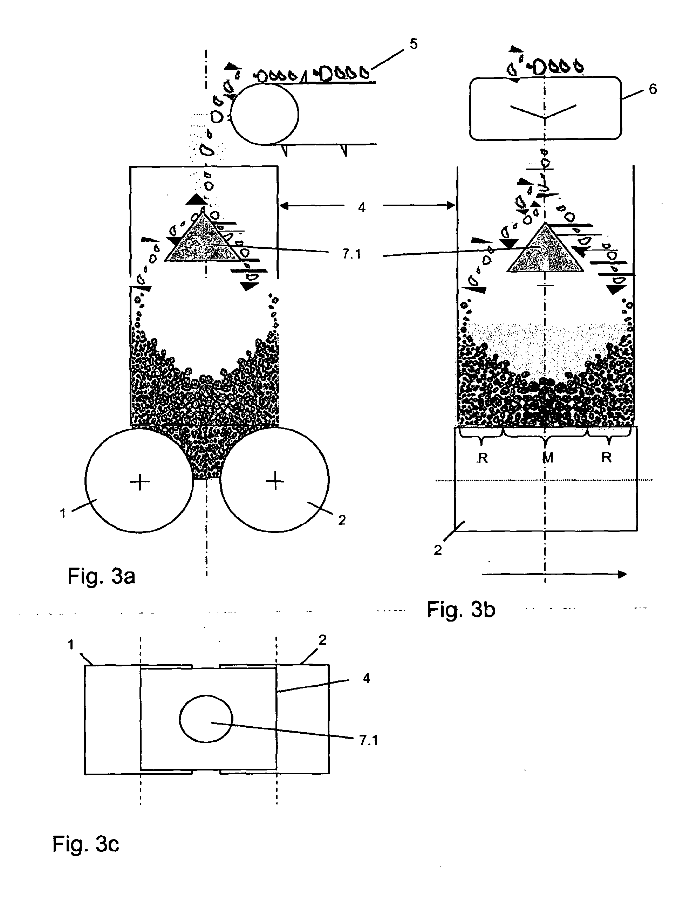

In den Fig. 3a-3c ist ein zweites Ausführungsbeispiel gezeigt, bei dem die Verteilereinrichtung 7.1 durch einen Kegel gebildet wird. Diese Ausführungsform hat den Vorteil, dass das gröbere Mahlgut von allen Seiten in die Mitte geleitet wird. Man muss jedoch gegenüber dem ersten Ausführungsbeispiel eine etwas aufwändigere Anbringung des Kegels in der Mitte des Aufgabeschachtes 4 in Kauf nehmen.

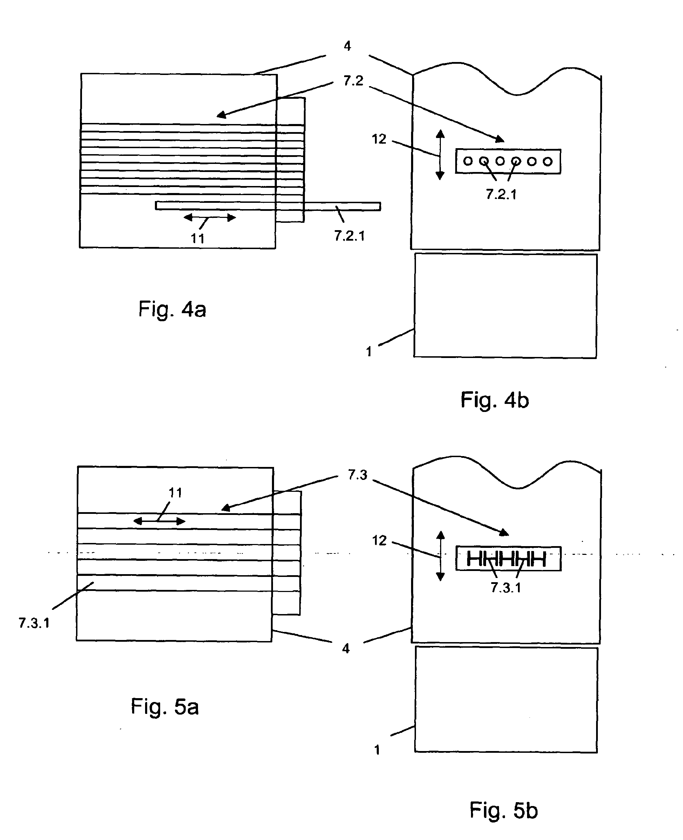

Im Folgenden werden anhand der Fig. 4a und 4b sowie Fig. 5a und 5b zwei weitere Ausführungsbeispiele gezeigt, die zudem eine Verstellung der Breite als auch der Höhe der Verteilereinrichtung ermöglichen. In den Fig. 4a und 4b ist die Verteilereinrichtung 7.2 als Nadelschieber ausgebildet, wobei die stangenförmigen Elemente 7.2.1 einzeln in den Aufgabeschacht 4 herein- oder herausgeführt werden können (Doppelpfeil 11), um auf diese Weise die Breite der Verteilereinrichtung anpassen zu können. Die hierfür erforderliche Mechanik ist aus dem Stand der Technik hinlänglich bekannt und wird daher nicht näher erläutert. Darüber hinaus kann auch eine geeignete Vorrichtung vorgesehen werden, um den Abstand der Verteilereinrichtung 7.2 gegenüber dem Mahlspalt 3 zu verändern (siehe Doppelpfeil 12).

Im Ausführungsbeispiel gemäß Fig. 5a und 5b ist eine Verteilereinrichtung 7.3 dargestellt, die mehrere H-förmige Balken 7.3.1 umfasst, die ebenfalls einzeln oder gemeinsam in den Aufgabeschacht 4 hinein- oder herausgeschoben werden können, um dadurch die Breite der Verteilereinrichtung 7.3 anzupassen. Durch die H-förmige Ausbildung dieser Balken, kann sich in den nach oben offenen Rinnen Mahlgut 5 ansammeln, welches dann einen autogenen Verschleißschutz für die Verteilereinrichtung bildet.

Anstelle der im Aufgabeschacht 4 angeordneten Verteilereinrichtungen wäre die Ausbildung von zwei in Richtung der Längserstreckung des Mahlspalts gegenüberliegenden Schüttkegeln prinzipiell auch durch zwei in geeigneter Weise positionierte Zuführeinrichtungen denkbar, die das Mahlgut derart in den Aufgabeschacht einbringen, dass sich bezogen auf die Längserstreckung des Mahlspalts im Mittenbereich M des Mahlspalts gröberes Mahlgut als in den Randbereichen R ansammelt.

Durch die erfindungsgemäße Verteilung des gröberen und feineren Anteils des Mahlgutes längs des Mahlspaltes 3 kann der energetisch effizientere Mittenbereich M gezielt zur Zerkleinerung des gröberen Mahlgutes ausgenutzt werden, wodurch eine wesentliche effizientere Zerkleinerung möglich ist.

## Patentansprüche

1. Walzenmühle zur Zerkleinerung von sprödem Mahlgut (5) unterschiedlicher Körnung mit zwei Mahlwalzen (1, 2), die zwischen sich einen Mahlspalt (3) bilden und einem Aufgabeschacht (4) zur Zuführung des Mahlguts (5) zum Mahlspalt, wobei im Aufgabeschacht (4) wenigstens eine Verteilereinrichtung (7) vorgesehen ist, wobei die Verteilereinrichtung (7) über einem Mittenbereich (M) des Mahlspalts (3) angeordnet ist,
**dadurch gekennzeichnet, dass** die Verteilereinrichtung (7) aus mehreren Balken (7.3.1) besteht oder als Nadelschieber (7.2) ausgebildet ist, wobei sich die Balken oder der Nadelschieber quer zur Längserstreckung (3a) des Mahlspalts (3) über den Mahlspalt (3) erstrecken und 5 bis 70% des Querschnitts des Aufgabeschachts abdecken.

2. Walzenmühle nach Anspruch 1, **dadurch gekennzeichnet, dass** die Verteilereinrichtung (7) 10 bis 55%, des Querschnitts des Aufgabeschachts abdeckt.

3. Walzenmühle nach Anspruch 1, **dadurch gekennzeichnet, dass** sich die Verteilereinrichtung (7; 7.2; 7.3) von einer Wandung (4a) des Aufgabeschachts (4) bis zu einer gegenüberliegenden Wandung (4b) des Aufgabeschachts (4) erstreckt.

4. Walzenmühle nach Anspruch 1, **dadurch gekennzeichnet, dass** die Verteilereinrichtung (7.2; 7.3) in der Breite und/oder der Abstand der Verteilereinrichtung vom Mahlspalt einstellbar ist.

5. Verfahren zur Zerkleinerung von sprödem Mahlgut (5) unterschiedlicher Körnung, wobei das Mahlgut in einen Aufgabeschacht (4) aufgegeben und in einem sich zwischen zwei Mahlwalzen (1, 2) ausbildenden Mahlspalt (3) zerkleinert wird, wobei das Mahlgut (5) im Aufgabeschacht (4) mittels einer Verteilereinrichtung (7.2; 7.3) umgelenkt wird,
**dadurch gekennzeichnet, dass** das Mahlgut (5) im Aufgabeschacht (4) umgelenkt wird, sodass sich im Aufgabeschacht wenigstens zwei in Richtung der Längserstreckung (3a) des Mahlspalts (3) gegenüberliegende Schüttkegel (9, 10) ausbilden und das gröbere Mahlgut (5a) zu einem Mittenbereich (M) des Mahlspalts (3) abrutscht, sodass sich bezogen auf die Längserstreckung (3a) des Mahlspalts (3) im Mittenbereich (M) des Mahlspalts (3) gröberes Mahlgut als in den Randbereichen (R) ansammelt.

6. Verfahren nach Anspruch 5, **dadurch gekennzeichnet, dass** die Breite der Verteilereinrichtung (7.2; 7.3) und/oder die Höhe der Verteilereinrichtung über dem Mahlspalt (3) im laufenden Betrieb der Walzenmühle in Abhängigkeit wenigstens eines Betriebsparameters eingestellt wird.

## Claims

1. Roller mill for crushing brittle material for grinding (5) of different grain sizes, having two grinding rollers (1, 2) which form between them a grinding gap (3), and a delivery chute (4) for feeding the material for grinding (5) to the grinding gap, wherein there is provided in the delivery chute (4) at least one distributor device (7), wherein the distributor device (7) is arranged above a middle region (M) of the grinding gap (3),
**characterised in that** the distributor device (7) consists of a plurality of beams (7.3.1) or is in the form of a needle pusher (7.2), wherein the beams or the needle pusher extend above the grinding gap (3) transversely to the longitudinal extent (3a) of the grinding gap (3) and cover from 5 to 70% of the cross-section of the delivery chute.

2. Roller mill according to claim 1, **characterised in that** the distributor device (7) covers from 10 to 55% of the cross-section of the delivery chute.

3. Roller mill according to claim 1, **characterised in that** the distributor device (7; 7.2; 7.3) extends from one wall (4a) of the delivery chute (4) to an opposite wall (4b) of the delivery chute (4).

4. Roller mill according to claim 1, **characterised in that** the distributor device (7.2; 7.3) is adjustable in terms of its width and/or the distance of the distributor device from the grinding gap.

5. Method for crushing brittle material for grinding (5) of different grain sizes, wherein the material for grinding is delivered into a delivery chute (4) and is crushed in a grinding gap (3) formed between two grinding rollers (1, 2), wherein the material for grinding (5) is deflected in the delivery chute (4) by means of a distributor device (7.2; 7.3),
**characterised in that** the material for grinding (5) is deflected in the delivery chute (4) so that there form in the delivery chute at least two cone-shaped piles of loose material (9, 10) which are located opposite one another in the direction of the longitudinal extent (3a) of the grinding gap (3), and the coarser material for grinding (5a) slides down to a middle region (M) of the grinding gap (3), so that, based on the longitudinal extent (3a) of the grinding gap (3), coarser material for grinding accumulates in the middle region (M) of the grinding gap (3) than in the edge regions (R).

6. Method according to claim 5, **characterised in that** the width of the distributor device (7.2; 7.3) and/or the height of the distributor device above the grinding gap (3) is adjusted in dependence on at least one operating parameter during operation of the roller mill.

## Revendications

1. Broyeur à cylindres pour le broyage d'une matière à broyer cassante (5) de granulométrie variable, ledit broyeur à cylindres comprenant deux cylindres de broyage (1, 2) qui forment entre eux un interstice de broyage (3), et comprenant un puits de chargement (4) servant à amener, jusqu'à l'interstice de broyage, la matière à broyer (5), où il est prévu, dans le puits de chargement (4), au moins un dispositif de distribution (7), où le dispositif de distribution (7) est disposé au-dessus d'une zone centrale (M) de l'interstice de broyage (3),
**caractérisé en ce que** le dispositif de distribution (7) se compose de plusieurs poutres (7.3.1) ou bien est conçu comme un poussoir à aiguille (7.2), où les poutres ou le poussoir à aiguille s'étend(ent) au-dessus de l'interstice de broyage (3), de façon transversale par rapport à l'étendue longitudinale (3a) de l'interstice de broyage (3), lesdites poutres ou ledit poussoir à aiguille recouvrant de 5 % à 70 % de la section du puits de chargement.

2. Broyeur à cylindres selon la revendication 1, **caractérisé en ce que** le dispositif de distribution (7) recouvre de 10 % à 55 % de la section du puits de chargement.

3. Broyeur à cylindres selon la revendication 1, **caractérisé en ce que** le dispositif de distribution (7 ; 7.2 ; 7.3) s'étend à partir d'une paroi (4a) du puits de chargement (4), jusqu'à une paroi opposée (4b) du puits de chargement (4).

4. Broyeur à cylindres selon la revendication 1, **caractérisé en ce que** le dispositif de distribution (7.2 ; 7.3) est réglable en largeur et/ou la distance du dispositif de distribution, par rapport à l'interstice de broyage est réglable.

5. Procédé de broyage d'une matière à broyer cassante (5), de granulométrie variable, où la matière à broyer est chargée dans un puits de chargement (4) et broyée dans un interstice de broyage (3) se formant entre deux cylindres de broyage (1, 2), où la matière à broyer (5) est redirigée dans le puits de chargement (4), au moyen d'un dispositif de distribution (7.2 ; 7.3), **caractérisé en ce que** la matière à broyer (5) est redirigée dans le puits de chargement (4), de sorte qu'au moins deux cônes de déversement opposés (9, 10) se forment dans le puits de chargement, suivant la direction de l'étendue longitudinale (3a) de l'interstice de broyage (3), et la matière à broyer (5a) plus grossière glisse jusqu'à une zone centrale (M) de l'interstice de broyage, de sorte qu'il s'accumule, dans la zone centrale (M) de l'interstice de broyage (3), une matière à broyer plus grossière que dans les zones de bordure (R), par rapport à l'étendue longitudinale (3a) de l'interstice de broyage (3).

6. Procédé selon la revendication 5, **caractérisé en ce que** la largeur du dispositif de distribution (7.2 ; 7.3) et/ou la hauteur du dispositif de distribution, au-dessus de l'interstice de broyage (3), sont réglées au cours du fonctionnement du broyeur à cylindres, en fonction au moins d'un paramètre de fonctionnement.
